# FASCICULE DE BREVET EUROPEEN

(11) **EP 2 830 360 B1**
(45) Date de publication et mention de la délivrance du brevet: **21.03.2018**
(21) Numéro de dépôt: 14178076.7
(22) Date de dépôt: 22.07.2014
(51) Int. Cl.: H04W 40/24, H04W 84/18

(54) **Procédé pour l'échange en sécurité d'une donnée sur un réseau ad-hoc mettant en oeuvre un service de diffusion Xcast et noeud associé**
Verfahren zum sicheren Austausch von Daten in einem Ad-hoc-Netz, bei dem ein Xcast-Sendedienst verwendet wird, und entsprechender Knoten
Method for secure exchange of data over an ad-hoc network using an Xcast broadcast service and associated node

(30) Priorité: 25.07.2013 FR 1301788
(43) Date de publication de la demande: 28.01.2015
(73) Titulaire: Thales, 92200 Neuilly Sur Seine (FR)
(72) Inventeur: Fouladgar, Sepideh, 92622 GENNEVILLIERS CEDEX (FR); Duputz, Patrick, 92622 GENNEVILLIERS CEDEX (FR)
(74) Mandataire: Lavoix

(56) Documents cités:
- US-A1- 2010 115 272
- IN-SUNG HAN ET AL: "Multi-Path Security-Aware Routing Protocol Mechanism for Ad Hoc Network", HYBRID INFORMATION TECHNOLOGY, 2006. ICHIT '06, IEEE, PISCATAWAY, NJ, USA, 9 novembre 2006 (2006-11-09), pages 620-626, XP032070125, DOI: 10.1109/ICHIT.2006.253556 ISBN: 978-0-7695-2674-4 & SEUNG YI ET AL: "SECURITY AWARE AD HOC ROUTING FOR WIRELESS NETWORKS", ANNUAL WORKSHOP ON MOBILE AND AD HOC NETWORKING AND COMPUTING.MOBIHOC, XX, XX, 1 octobre 2001 (2001-10-01), pages 1-4, XP002435568,
- XIAOJIANG DU ET AL: "Two Tier Secure Routing Protocol for Heterogeneous Sensor Networks", IEEE TRANSACTIONS ON WIRELESS COMMUNICATIONS, IEEE SERVICE CENTER, PISCATAWAY, NJ, US, vol. 6, no. 9, 1 septembre 2007 (2007-09-01), pages 3395-3401, XP011195937, ISSN: 1536-1276, DOI: 10.1109/TWC.2007.06095
- HRISHIKESH GOSSAIN ET AL: "A scalable explicit multicast protocol for MANETs", JOURNAL OF COMMUNICATIONS AND NETWORKS, NEW YORK, NY, USA,IEEE, US, vol. 7, no. 3, 1 septembre 2005 (2005-09-01), pages 294-306, XP011483650, ISSN: 1229-2370, DOI: 10.1109/JCN.2005.6389814
- SHASHIKALA ET AL: "A survey on secured routing protocols for wireless sensor network", COMPUTING COMMUNICATION&NETWORKING TECHNOLOGIES (ICCCNT), 2012 THIRD INTERNATIONAL CONFERENCE ON, IEEE, 26 juillet 2012 (2012-07-26), pages 1-8, XP032442891, DOI: 10.1109/ICCCNT.2012.6395931

## Description

La présente invention se rapporte au domaine de la sécurité des réseaux ad-hoc.

Dans le présent document, par « acheminement sécurisé », on entend un acheminement entre un émetteur et un destinataire d'une donnée garantissant la protection de cette donnée échangée en confidentialité et en intégrité.

L'acheminement sécurisé de données entre un émetteur et un destinataire implique que l'émetteur et le destinataire partagent une association de sécurité, SA dans ce qui suit (selon l'acronyme anglais « Security Association »). Une SA est constituée de clés et d'algorithmes cryptographiques nécessaires à la protection des données échangées.

L'invention est plus particulièrement relative aux réseaux ad-hoc mettant en oeuvre un service de diffusion de données du type 1 émetteur vers N destinataires, par opposition à un service dit « unicast » d'1 émetteur vers 1 destinataire.

Parmi les services de diffusion 1 émetteur vers N destinataires, on connait les services de diffusion dit « multicast » dans lesquels l'émetteur s'adresse à un groupe destinataire. Au cours de l'exploitation du réseau, les noeuds du réseau s'abonnent ou se désabonnent aux différents groupes destinataires.

Parmi les services de diffusion 1 émetteur vers N destinataires, on connaît également les services de diffusion dit « Xcast », dans lesquels l'émetteur s'adresse explicitement à une liste de destinataires. Par rapport à un service multicast, un service Xcast présente l'avantage de ne pas avoir à mettre en oeuvre un mécanisme permettant de maintenir à jour la table des noeuds enregistrés dans les différents groupes destinataires présents sur le réseau.

Ainsi, l'invention est plus particulièrement relative aux réseaux ad-hoc mettant en oeuvre un mode de diffusion du type Xcast.

Le document "A scalable explicit multicast protocol for MANETs", by Hrishikesh Gossain et al., 1 septembre 2005, décrit un procédé de mise en ouvre d'un service Xcast dans un réseau ad-hoc mobile. Ce document décrit l'idée de base de la distribution des paquets dans Xcast: l'émetteur met dans l'entête d'un message qu'il transmet le noeud prochain et la liste des destinataires. L'exploitation du mode de diffusion Xcast permet d'optimiser les performances d'un réseau ad-hoc, en particulier d'optimiser la bande passante d'un réseau radio ad-hoc.

Cependant, l'absence d'une gestion centralisée et la pluralité des destinataires du mode de diffusion Xcast complexifient les mécanismes de génération et de distribution des associations de sécurité, et des clés cryptographiques correspondantes.

La sécurisation du mode de diffusion Xcast constitue un enjeu important à la fois du point de vue des performances et de la sécurité des réseaux radio ad-hoc privés, gouvernementaux et/ou de défense.

Tous les procédés de sécurisation connus à ce jour dégradent le niveau de performance (bande passante pour le trafic utilisateur et disponibilité du réseau) et le niveau de sécurité (confidentialité des données utilisateur). Ces autres procédés de sécurisation à iso-performance dégradent la sécurité, et à iso-sécurité dégradent la performance.

Par exemple, la protection d'une donnée utilisateur sensible ou classifiée en mode Xcast peut être obtenue par le chiffrement de cette donnée par une clé partagée par l'ensemble des noeuds du réseau. Ce procédé offre une gestion simplifiée des clés de protection Xcast. Toutefois, il ne permet pas de cloisonner cryptographiquement les communications utilisateurs au sein du réseau. Dans ces conditions, la compromission d'un noeud du réseau (perte ou vol) entraîne la compromission de toutes les communications en mode Xcast sur le réseau et impose le renouvellement de l'ensemble des clés de l'ensemble des noeuds du réseau.

Par exemple encore, la protection d'une donnée utilisateur sensible ou classifiée en mode Xcast peut être obtenue de la façon suivante : la donnée est transmise chiffrée au moyen d'une clé de chiffrement Xcast, qui est elle-même transmise chiffrée au moyen des clés que partage l'émetteur avec chacun des N destinataires. Ce procédé offre une capacité théorique de cloisonner cryptographiquement les communications utilisateurs au sein du réseau. Toutefois, il entraîne une gestion des clés complexe impliquant la diffusion à l'ensemble des noeuds, des clés de protection Xcast. La compromission d'un noeud du réseau entraîne la compromission de toutes les communications en mode Xcast au sein du réseau et impose le renouvellement des clés Xcast sur l'ensemble des noeuds du réseau. Ce procédé entraîne également une forte augmentation de l'entête des messages de données diffusés en Xcast. En effet, la partie d'en-tête du message comporte, pour chacun des N destinataires, la clé de chiffrement Xcast, chiffrée au moyen de la clé partagée entre l'émetteur et le destinataire considéré.

De manière plus générale, il existe des procédés de sécurisation faisant soit l'hypothèse d'une planification de l'ensemble des échanges de messages entre émetteurs et destinataires et donc d'une pré-configuration des associations de sécurité utilisées pour la protection des données échangées, soit la mise en oeuvre de protocoles de négociation d'une SA et de clés au sein d'un groupe constitué de l'émetteur et des destinataires. Ce dernier mécanisme de négociation d'une SA entre plusieurs interlocuteurs est fastidieux et n'est acceptable que dans l'éventualité où la conformation du groupe évolue peu au cours du temps et de l'exploitation du réseau, ce qui est rarement le cas dans des réseaux ad-hoc, en particulier radio.

En conclusion, si des mécanismes de sécurisation des données sont connus pour les modes de diffusion unicast et multicast, aucun mécanisme efficace n'existe à ce jour pour la sécurisation des données pour le mode de diffusion Xcast.

L'invention a pour but de pallier ce problème.

Pour cela, l'invention a pour objet un procédé conforme à la revendication 1. Suivant des modes particuliers de réalisation, le procédé comporte une ou plusieurs des caractéristiques suivantes, prise(s) isolément ou suivant toutes les combinaisons techniquement possibles :
- le graphe de sécurité comporte :
   - une pluralité de noeuds, chaque noeud du graphe de sécurité correspondant à un unique noeud du graphe de communication ;
   - une pluralité d'associations de sécurité, une association de sécurité regroupant plusieurs noeuds partageant un même ensemble de clés et d'algorithmes de chiffrement ; et,
   - une pluralité de noeuds de confiance, chaque noeud de confiance partageant au moins une association de sécurité amont avec au moins un noeud amont et au moins une association de sécurité aval avec au moins un noeud aval, et étant propre à effectuer une opération de trans-chiffrement d'une donnée protégée conformément à l'association de sécurité amont en une donnée protégée conformément à l'association de sécurité aval ;
- la donnée est relayée le long de la route de sécurité par un noeud de confiance ;
- à l'étape de génération, le message généré respecte le protocole suivant :
   - une partie d'en-tête du message comporte : l'identifiant de l'émetteur du message ; l'identifiant de l'émetteur de la donnée ; l'identifiant de chaque destinataire du message ; et, pour chaque identifiant du destinataire du message, la liste des destinataires de la donnée accessibles via le destinataire du message ;
   - une partie de charge utile du message comportant la donnée protégée selon l'association de sécurité partagée entre l'émetteur du message et le ou chaque destinataire du message ;
- le procédé comporte une étape initiale de configuration des noeuds de confiance, destinée à définir le ou chaque trans-chiffrement entre une association de sécurité amont et une association de sécurité aval que chaque noeud de confiance est autorisé à effectuer ;
- à l'étape de routage sur la base du graphe de sécurité, pour chaque destinataire de la donnée, une meilleure route de sécurité est sélectionné en se fondant sur un ou plusieurs des critères suivants :
   - Minimisation du nombre de trans-chiffrement par des noeuds de confiance ;
   - Minimisation du nombre de bonds sur le graphe de communication ; et/ou
   - Maximisation d'une grandeur correspondant à la qualité de service associée à la route suivie sur le graphe de communication.
- la diffusion d'une donnée vers un destinataire est bloquée lorsqu'aucune route de sécurité ne permet de joindre l'émetteur de la donnée au destinataire de la donnée sur le graphe de sécurité.

L'invention a également pour objet un noeud d'un réseau ad-hoc mettant en oeuvre un service de diffusion Xcast, ledit noeud comportant une topologie de communication dudit réseau définie par un graphe de communication, caractérisé en ce qu'il comporte, en outre, un graphe de sécurité du réseau définissant une topologie de sécurité du réseau et qu'il est propre à mettre en oeuvre un procédé conforme au procédé précédent pour la diffusion en sécurité d'une donnée générée par un émetteur de la donnée, vers un ou plusieurs destinataire de la donnée.

L'invention a également pour objet un réseau ad-hoc mettant en oeuvre un service de diffusion Xcast, caractérisé en ce qu'il comporte une pluralité de noeuds, chaque noeud étant conforme au noeud précédent.

De préférence, le réseau comporte au moins un ensemble de noeuds munis respectivement d'une unité de communication radio, de manière à constituer entre eux un réseau de transmission radio.

L'invention et ses avantages seront mieux compris à la lecture de la description qui va suivre, donnée uniquement à titre illustratif et non limitatif, d'un exemple de réalisation, faite en se référant aux dessins annexés sur lesquels :
- la figure 1 est une représentation d'un graphe de topologie de sécurité en superposition d'un graphe de topologie de transmission pour un réseau radio ad-hoc ;
- la figure 2 est un schéma blocs d'un exemple d'échange de données dans le réseau de la figure 1 ; et,
- la figure 3 représente les messages de la couche de sécurité pour les échanges de données de la figure 2.

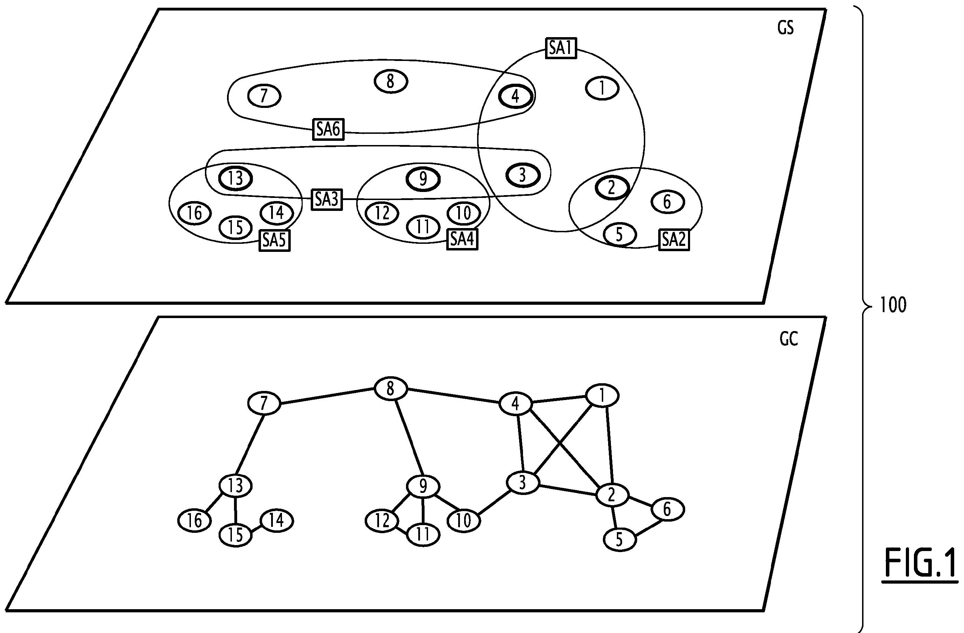

La figure 1 représente un réseau 100.

Le réseau 100 est un réseau radio ad-hoc mettant en oeuvre un service de diffusion Xcast.

Le réseau 100 comporte M noeuds. Sur la figure 1, le réseau 100 comporte 16 noeuds.

Chaque noeud constitue, pour une application associée, un point d'accès au réseau 100.

En particulier, le noeud 3 constitue un point d'accès pour une application d'administration du réseau 100.

Au niveau d'une couche de communication, le réseau 100 est décrit par une topologie de communication, qui est définie par un graphe de communication GC.

Le graphe GC comporte M noeuds connectés par p liens.

Un lien entre deux noeuds du graphe GC correspond à l'établissement d'une liaison bidirectionnelle de radiocommunication entre ces deux noeuds.

En fonction des caractéristiques de chaque lien (protocole de communication mis en oeuvre, liaison filaire ou radio, fréquence utilisée, etc.), le réseau 100 peut être subdivisé en une pluralité de réseaux de transmission. Pour des raisons de clarté, sur la figure 1, le réseau 100 est représenté comme constitué d'un unique réseau de transmission radio.

Pour permettre la mise en oeuvre d'un procédé de routage en sécurité, le réseau 100 est également décrit, au niveau d'une couche de sécurité, par une topologie de sécurité. Celle-ci est utilisée en superposition de la topologie de communication.

La topologie de sécurité est entièrement définie par un graphe de sécurité GS.

Le graphe de sécurité GS du réseau 100 comporte M noeuds et q associations de sécurité.

Chaque noeud du graphe de sécurité GS correspond à un et un seul noeud du graphe de communication GC. Ils sont repérés par les mêmes identifiants sur les deux graphes.

Un lien entre deux noeuds sur le graphe de sécurité GS correspond à l'établissement d'une association de sécurité entre ces deux noeuds. Deux noeuds sont dits en visibilité directe s'ils partagent une association de sécurité.

Ainsi, chaque noeud du graphe de sécurité GS partage avec un ou plusieurs autres noeuds une association de sécurité SAi. Un domaine de sécurité est établi entre plusieurs noeuds, lorsqu'une association de sécurité commune existe entre ces noeuds. Sur le graphe de sécurité GS, une bulle est dessinée autour des noeuds partageant une même association de sécurité SAi, c'est-à-dire des noeuds du même domaine de sécurité.

Le graphe de sécurité GS comporte des noeuds de confiance sélectionnés parmi l'ensemble des noeuds qui appartiennent simultanément à plusieurs domaines de sécurité. A chaque noeud de confiance est associée une stratégie de sécurité autorisant ou non le trans-chiffrement d'une donnée d'une association de sécurité amont, vers une association de sécurité aval. Un noeud de confiance permet ainsi le trans-chiffrement d'une donnée, sans risque de compromission, d'une association de sécurité amont, vers une association de sécurité aval. Un noeud de confiance permet donc le passage d'une donnée d'un domaine de sécurisé amont, vers un domaine de sécurité aval.

Sur le graphe de sécurité GS de la figure 1, un noeud de confiance est entouré d'un trait épais par opposition aux autres noeuds du réseau.

Une route de sécurité est établie sur le graphe de sécurité GS, lorsqu'un noeud émetteur peut transmettre une donnée vers une liste de noeuds destinataires, en passant éventuellement par un ou plusieurs noeuds relais, de sorte que cette donnée soit à tout moment protégée par une association de sécurité.

Les associations de sécurité, la liste des noeuds de confiance ainsi que les trans-chiffrements qu'ils sont autorisés à effectuer sont de préférence configurées dans une phase préalable à l'exploitation du réseau 100.

Chaque noeud est un calculateur qui comporte une unité de calcul, telle qu'un processeur, une unité de mémorisation, telle qu'une mémoire morte et une mémoire vive, et au moins une unité de communication, qui dans le mode de réalisation décrit est du type radio, permettant l'échange de paquets de données sur la couche de communication du réseau 100, selon un protocole prédéterminé, par exemple du type IP. Un noeud est par exemple une carte réseau qui exécute les instructions d'un logiciel pilote adapté.

Chaque noeud comporte :
- Un module de sécurité, comportant un algorithme de routage de sécurité, adapté pour élaborer un message à partir de la donnée à échanger et en tenant compte de la topologie de sécurité du réseau 100 ; et
- Un module de routage comportant un algorithme de routage de communication adapté pour élaborer un paquet à partir d'un message et en tenant compte de la topologie de communication du réseau 100.

Ainsi, chaque noeud du réseau mémorise une copie du graphe de communication GC et une copie du graphe de sécurité GS. Dit autrement, les graphes de communication et de sécurité sont identiques d'un noeud à l'autre du réseau 100. Ainsi, à chaque instant, chaque noeud du réseau dispose d'une vue complète de la topologie de communication et de la topologie de sécurité.

Chaque noeud sélectionné comme noeud de confiance comporte, en outre, un module de trans-chiffrement.

Au cours d'une phase initiale de configuration du réseau 100, le graphe de sécurité GS définissant les domaines de sécurité, les noeuds de confiance, ainsi que les trans-chiffrements autorisés sur chaque noeud de confiance, sont configurés sur chaque noeud n du réseau 100.

Les noeuds sélectionnés comme noeuds de confiance se voient attribuer les clés associées aux domaines de sécurité qu'ils relient. Une politique de sécurité configurée sur chaque noeud de confiance définit les trans-chiffrements autorisés entre un domaine sécurisé amont et un domaine sécurisé aval du noeud de confiance. Un noeud de confiance voit sa capacité de trans-chiffrement activée lorsqu'il est en possession de la politique de sécurité définissant les trans-chiffrements autorisés, ainsi que des clés des domaines de sécurité amont et aval qu'il relie.

En phase d'exploitation, le graphe de communication GC peut être amené à évoluer. La synchronisation de la connaissance de l'état du graphe de communication GC entre les différents noeuds du réseau 100 est réalisée par un procédé connu, tel qu'un procédé utilisant un protocole de routage ad-hoc, hors de la portée du présent document.

Le graphe de sécurité GS peut également être modifié en phase d'exploitation. Cette reconfiguration du graphe de sécurité GS peut être réalisée au moyen de l'application d'administration et de la diffusion de messages de configuration aux différents noeuds du réseau 100, et ce chaque fois qu'il est nécessaire de mettre à jour le graphe de sécurité GS, par exemple lorsqu'un noeud du réseau est corrompu. La nouvelle configuration du graphe de sécurité GS peut être chargée sur les différents noeuds et entrer en vigueur sur l'ensemble de ces noeuds à un instant coordonné, les différents noeuds étant synchronisés entre eux.

Ainsi, à chaque instant d'exploitation du réseau, chaque noeud possède la même vision de la topologie de communication et de la topologie de sécurité du réseau 100.

Le procédé mis en oeuvre au niveau de la couche de sécurité, puis au niveau de la couche de communication sous-jacente, par chaque noeud, permet de transmettre de façon sécurisée une donnée depuis un émetteur de la donnée, vers chacun des destinataires de la donnée, qui appartiennent à une liste de destinataires.

Lors de l'exécution du module de sécurité d'un noeud relais, le graphe de sécurité GS est utilisé pour définir une route de sécurité sur le graphe de sécurité permettant le routage de sécurité de la donnée, depuis le noeud relais vers le destinataire de la donnée. Un message de donnée est alors élaboré pour transmettre la donnée protégée depuis le noeud relais vers le noeud relais, suivant la route de sécurité définie. Le module de sécurité élabore un message dont la partie de charge utile est constituée par la donnée protégée avec l'association de sécurité partagée par le noeud relais et le noeud relais suivant. Ce message est passé au module de routage du noeud relais.

Lors de l'exécution du module de routage du noeud relais, le graphe de communication GC est utilisé pour définir une route de communication sur le graphe de communication permettant le routage de communication du message du noeud relais émetteur du message, vers le noeud relais suivant, destinataire du message. Un paquet est alors élaboré en encapsulant le message et en l'adressant au noeud relais suivant. Le paquet est transmis depuis le noeud relais vers le noeud relais suivant sur la couche de communication du réseau 100, en étant éventuellement relayer par des noeuds intermédiaires agissant en simple routeur du paquet.

De proche en proche, la donnée est acheminée du noeud émetteur de la donnée vers le noeud destinataire de la donnée.

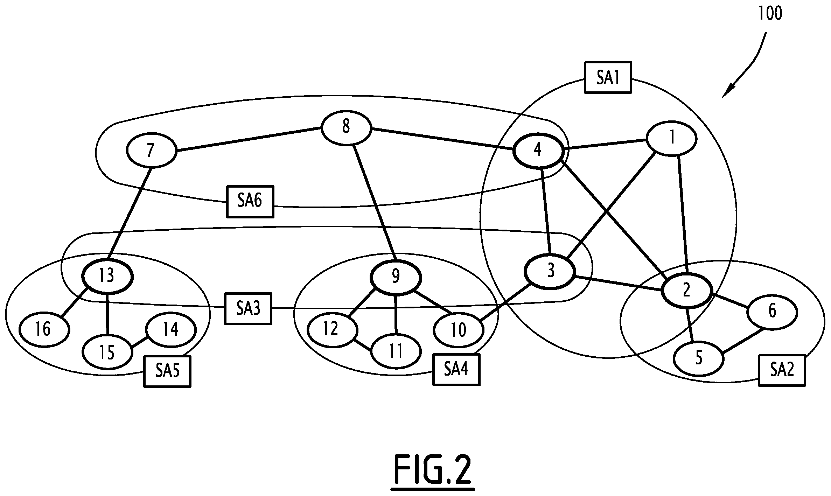

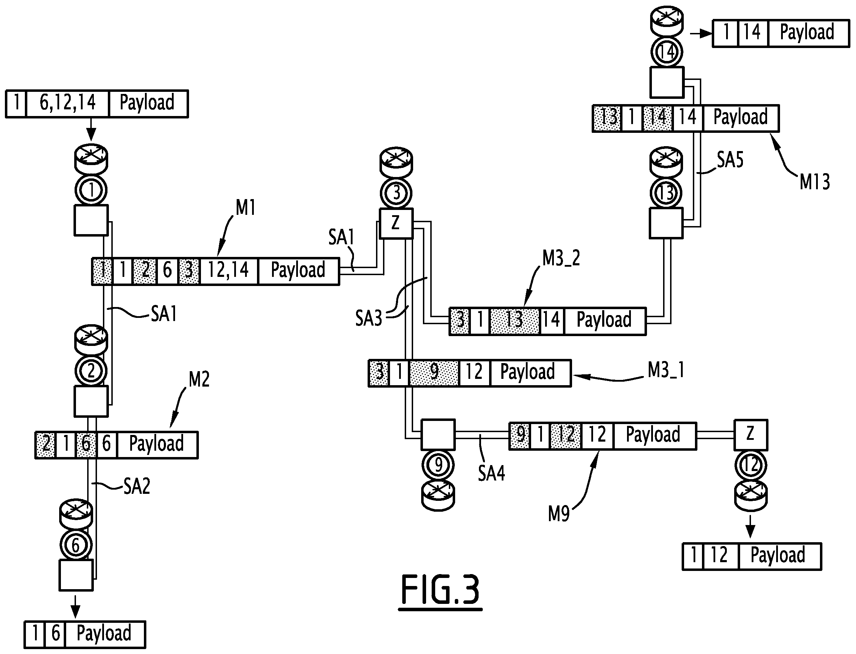

De manière plus détaillée, et en se référant aux figures 2 et 3, un noeud émetteur E d'une donnée souhaite diffuser, en mode Xcast, une donnée Payload vers une liste L de noeuds destinataires de la donnée Dj.

Par exemple, le noeud 1, fonctionnant en tant qu'émetteur souhaite diffuser en sécurité une donnée vers une liste L constituée des noeuds destinataires 6, 12 et 14.

Pour chaque destinataire Dj de la liste L, le module de sécurité de l'émetteur E est exécuté pour rechercher, dans le graphe de sécurité GS, la meilleure route de sécurité de E vers Dj.

Les critères pour la sélection de la meilleure route de sécurité sont par exemple les suivants :
- Le prochain bond sur le graphe de sécurité GS doit conduire au noeud destinataire de la donnée Dj ;
- à défaut, le prochain bond sur le graphe de sécurité GS doit conduire à un noeud de confiance utilisé comme noeud relais Ri de la donnée ;
- si plusieurs noeuds de confiance sont accessibles en un bond, est choisi le noeud de confiance qui correspond à la route de sécurité présentant le nombre de trans-chiffrements minimal parmi les différentes routes de sécurité de l'émetteur E vers le destinataire Dj.

Eventuellement, ce choix d'un noeud relais est pondéré par des informations reçues de la couche de communication du réseau (« cross-layering » en anglais). Ainsi à chaque route de sécurité possible de l'émetteur E vers le destinataire Dj est associé un poids qui est une fonction du nombre de bonds de la route de communication sur le graphe de communication sous-jacent. Eventuellement, ce poids est aussi fonction de la valeur d'une grandeur relative à la qualité de service (QoS pour « Quality Of Service » en anglais) induite par le choix de cette route de sécurité et de la route de communication sous-jacente correspondante.

Ainsi, si l'émetteur E de la donnée partage une association de sécurité avec le destinataire Dj de la donnée, le premier bond de la meilleure route de sécurité permet d'atteindre directement le destinataire Dj de la donnée.

En revanche, si l'émetteur E de la donnée ne partage pas une association de sécurité avec le destinataire Dj de la donnée, alors le premier bond de la route de sécurité permet de relayer la donnée vers un noeud de confiance et le passage de cette donnée dans un autre domaine de sécurité. De domaine en domaine, le noeud destinataire de la donnée Dj est atteint.

Dans l'exemple de la figure 2, l'émetteur 1 peut ainsi atteindre le destinataire 6 via la route de sécurité passant par le noeud de confiance 2. Le premier bond de cette route de sécurité est le bond vers le noeud relais 2 en utilisant l'association de sécurité SA1.

L'émetteur 1 peut atteindre le destinataire 12 via la route de sécurité passant par les noeuds de confiance 3 et 9. Le premier bond de cette route de sécurité est le bond vers le noeud relais 3 en utilisant l'association de sécurité SA1.

L'émetteur 1 peut atteindre le destinataire 14 via une route de sécurité passant par les noeuds de confiance 3 et 13. Le premier bond de cette route de sécurité est le bon vers le noeud relais 3 en utilisant l'association de sécurité SA1.

Puis l'émetteur E génère autant de messages de données que d'association de sécurité SAi correspondant aux premiers bonds des meilleures routes de sécurité vers les différents destinataires Dj de la liste L.

Ainsi, les premiers bonds des trois meilleures routes de sécurité du noeuds 1 vers les noeuds 6, 12 et 14 partagent la même association de sécurité SA1. L'émetteur 1 génère par conséquent un message M1.

De manière générale, le module de sécurité d'un noeud émetteur d'un message (noeud émetteur E de la donnée ou relais Ri de la donnée) est propre à générer un message M destiné à un noeud destinataire du message (noeud destinataire de la donnée D ou relais suivant Ri+1de la donnée) selon un protocole prédéterminé.

Ce protocole prévoit que la partie de charge utile du message M comporte la donnée sécurisée conformément aux clés et algorithmes d'une association de sécurité. Cette association de sécurité est celle qui est partagée entre l'émetteur du message et le destinataire du message.

Ce protocole prévoit également que la partie d'en-tête du message M comporte : l'identifiant de l'émetteur du message, E ou Ri ; l'identifiant de l'émetteur de la donnée E ; l'identifiant de chaque destinataire du message Ri+1 ou Dj (les différents destinataires du message partagent avec l'émetteur du message l'association de sécurité utilisée pour protéger la donnée) et, pour chaque destinataire du message, la liste des destinataires de la donnée Dj qui sont accessibles via le destinataire du message. De plus, l'en-tête peut comporter un identifiant de l'association de sécurité avec laquelle la donnée est protégée.

Ainsi, le message M1 élaboré par le noeud 1 comporte une charge utile correspondant à la donnée protégée selon l'association de sécurité SA1 et une partie d'en-tête comportant :
- 1 pour l'identifiant de l'émetteur du message M1 ;
- 1 pour l'identifiant de l'émetteur de la donnée Payload ;
- 2 pour l'identifiant du destinataire du message et, associé à cet identifiant, la liste des identifiants des destinataires de la donnée accessibles via le noeud 2, à savoir le noeud 6 ; et,
- 3 pour l'identifiant du destinataire du message et, associé à cet identifiant, la liste des identifiants des destinataires de la donnée accessibles via le noeud 3, à savoir les noeuds 12 et 14.

Le message M est ensuite passé au module de routage de l'émetteur E pour que ce dernier le route convenablement sur la couche de communication, vers les noeuds destinataires du message.

Par exemple, le module de routage du noeud 1, route le message M1 vers les destinataires mentionnés dans la partie d'entête de M1, à savoir, les noeuds 2 et 3.

Puisqu'un lien existe entre les noeuds 1 et 2, le message M1 est acheminé en un bond sur le graphe de communication vers le noeud 2. De manière similaire, puisqu'un lien existe entre les noeuds 1 et 3, le message M1 est acheminé en un bond vers le noeud 3.

Lorsqu'un noeud Ri reçoit le message M, si le noeud Ri n'est pas destinataire du message M, cela signifie que le noeud Ri est un noeud intermédiaire dans le routage de communication du message sur le graphe de communication GC entre un émetteur du message et un destinataire du message. Le module de routage du noeud Ri route alors le message M sur le réseau 100 vers le noeud destinataire du message conformément au graphe de communication GC

Si le noeud Ri est destinataire du message M, son module de routage de communication transmet le message M à son module de sécurité, qui est alors exécuté.

Le module de sécurité du noeud Ri lit la liste des destinataires de la donnée Dj associée à l'identifiant du noeud Ri.

Si l'identifiant du noeud Ri n'apparait pas dans cette liste, cela signifie que le noeud Ri n'est pas le destinataire de la donnée, mais un noeud relais sur la route de sécurité.

Le module de sécurité du noeud Ri identifie l'association de sécurité avec laquelle la donnée est protégée via un identifiant spécifique contenu dans l'entête du message M, tel que par exemple le champ « Security Parameter Index » du standard IPsec. Il vérifie l'intégrité de la donnée reçue et la rejette si elle n'est pas intègre. L'association de sécurité partagée entre l'émetteur du message et le noeud Ri est une association de sécurité amont pour le noeud Ri.

Le module de sécurité du noeud Ri détermine, comme décrit ci-dessus, la meilleure route de sécurité vers chacun des destinataires de la donnée Dj qui lui sont associés. Les associations de sécurité à utiliser pour les premiers bonds des meilleures routes de sécurité sont déterminées. Pour le noeud Ri, chacune de ces associations de sécurité est une association aval.

Pour chaque association de sécurité ainsi déterminée, le module de sécurité du noeud Ri vérifie qu'il a l'autorisation de trans-chiffrer la donnée de l'association de sécurité amont, vers l'association de sécurité aval. Il construit ensuite un message M' dont la partie utile comporte la donnée protégée selon l'association de sécurité aval. La partie d'en-tête du message M'indique l'identifiant de l'émetteur du message, Ri ; l'identifiant de l'émetteur de la donnée E ; l'identifiant de chaque destinataire du message Ri+1 ou Dj et, pour chaque destinataire du message, la liste des destinataires de la donnée Dj qu'il permet d'atteindre ; ainsi qu'éventuellement un identifiant de l'association de sécurité utilisée.

Ainsi, le noeud 2, destinataire du message M1, constate qu'il n'agit qu'en tant que noeud relais de la donnée à destination du noeud 6.

Il identifie que la donnée est protégée selon l'association de sécurité SA1 d'après l'identifiant d'association de sécurité indiqué dans l'en-tête de M1.

Le noeud 2 recherche à son tour, dans le graphe de sécurité GS, la meilleure route vers le noeud destinataire 6. Le noeud 6 appartient au domaine aval du noeud 2, domaine définit par l'association de sécurité SA2.

Le noeud 2 disposant de l'autorisation correspondante, il trans-chiffre la donnée du message M1 de SA1 vers SA2.

Le noeud 2 génère un message M2 dont la partie d'en-tête comporte :
- 2 pour l'identifiant de l'émetteur du message M2 ;
- 1 pour l'identifiant de l'émetteur de la donnée Payload ;
- 6 pour l'identifiant du destinataire du message et, associé à cet identifiant, le destinataire 6 de la donnée.

De la même façon, le noeud 3, destinataire du message M1, constate qu'il n'agit qu'en tant que noeud relais de la donnée à destination des noeuds 12 et 14.

Il identifie que la donnée est protégée selon l'association de sécurité SA1 d'après l'identifiant d'association de sécurité indiqué dans l'en-tête de M1.

Le noeud 3 recherche dans le graphe de sécurité GS la meilleure route de sécurité vers les noeuds destinataires de la donnée 12 et 14.

Le noeud 3 peut atteindre le noeud 12 via le noeud 9 à condition d'un nouveau trans-chiffrement.

Le noeud 3 peut atteindre le noeud 14 via le noeud 13.

Chaque premier bond de ces deux meilleures routes de sécurité s'effectue dans le domaine défini par l'association de sécurité SA3.

Le noeud 3 trans-chiffre la donnée en la protégeant avec les clés et algorithmes du lien sécurisé SA3.

Le noeud 3 élabore un premier message M3_1 dont l'en-tête comporte l'identifiant du noeud transmettant le message, ici le noeud 3, et l'émetteur de la donnée, ici le noeud 1, l'identifiant du destinataire du message, ici le noeud 9, et l'identifiant du destinataire de la donnée, ici le noeud 12.

Le noeud 3 élabore un second message M3_2 dont l'en-tête comporte l'identifiant du noeud transmettant le message, ici le noeud 3, et l'émetteur de la donnée, ici le noeud 1, l'identifiant du destinataire du message, ici le noeud 13, et l'identifiant du destinataire de la donnée, ici le noeud 14.

Le noeud 3 émet les deux messages.

Pour le premier message M3_1 du noeud 3 vers le noeud 9, la route de communication passe par le noeud intermédiaire 10, qui est en liaison à la fois avec le noeud 3 et le noeud 9 comme indiqué par le graphe de communication GC.

Pour le second message M3_2 du noeud 3 vers le noeud 13, la route de communication passe par les noeuds intermédiaires 4, 8 et 7, comme indiqué par le graphe de communication GC.

A son tour, le noeud 9 (respectivement 13), destinataire du message M3_1 (M3_2), mais non-destinataire de la donnée, doit relayer la donnée vers le noeud destinataire 12 (14).

Il identifie que la donnée est protégée selon l'association de sécurité SA3 d'après l'identifiant d'association de sécurité indiqué dans l'en-tête du message M3_1 (M3_2).

Le noeud 9 (13) recherche, dans le graphe de sécurité GS, la meilleure route de sécurité vers le noeud destinataire 12 (14).

Le noeud 9 (13) trans-chiffre la donnée en la protégeant avec les clés et algorithmes du lien sécurisé SA4 (SA5).

Le noeud 9 (13) génère un message M9 (M13) à destination du noeud 12 (14).

Si le noeud Ri est destinataire de la donnée, c'est-à-dire lorsque son identifiant appartient à la liste des noeuds Dj.

Le module de sécurité du noeud Dj identifie l'association de sécurité avec laquelle la donnée est protégée via l'identifiant contenu dans l'entête du message M. Il vérifie l'intégrité de la donnée reçue et la déchiffre si elle est intègre.

Ainsi, le noeud 12 (14) reçoit le message M9 (M13) qui lui est adressé et déchiffre la donnée qui lui est destinée avec les clés et algorithmes de sécurité de l'association de sécurité SA4 (SA5).

La donnée est ainsi diffusée de l'émetteur E vers une liste de destinataire Dj explicites, en étant à tout moment protégée par une association de sécurité. La donnée est protégée de proche en proche par les algorithmes et clés des liens sécurisés existants entre émetteur et noeuds relais, entre noeuds relais, et entre noeuds relais et noeuds destinataires.

La diffusion d'une donnée vers un destinataire est bloquée lorsqu'aucune route sécurisée ne permet pas de joindre le destinataire depuis l'émetteur.

Le procédé présenté ci-dessus permet ainsi l'acheminement sécurisé de données à destination d'une liste de destinataires, libre de changer pour chaque émission.

Pour acheminer de façon sécurisée des données vers une liste de destinataires, le procédé et le système de routage présentés ci-dessus ne nécessitent pas la négociation de clés de bout en bout entre les différents membres de ce groupe. Ils s'appuient sur les associations de sécurité existantes, et les passerelles entre ces associations de sécurité établies par les noeuds de confiance.

L'émetteur et l'ensemble des noeuds destinataires n'ont donc pas besoin d'être en visibilité directe pour communiquer de façon sécurisée. Bien qu'il n'y ait pas de clé partagée entre un émetteur et un ou plusieurs destinataires, ceux-ci arrivent à communiquer.

La manière de générer un message est compatible avec la réduction des en-têtes par les noeuds relais et intermédiaires tout au long de l'acheminement (élagage des adresses inutiles).

Le procédé et le système de routage présentés permettent ainsi de limiter le nombre nécessaire d'associations de sécurité au sein d'un réseau radio ad-hoc et par conséquent le nombre de clés cryptographiques gérées au sein du réseau. En effet, dans un réseau où le nombre de noeuds est important et où les destinataires sont souvent différents d'une émission à l'autre, si l'émetteur et les destinataires doivent obligatoirement partager une association de sécurité, les différentes combinaisons d'émetteurs et de destinataires nécessitent la mise en oeuvre d'un très grand nombre d'associations de sécurité au sein du réseau.

Le présent procédé et le système associé trouve une application notamment aux réseaux ad-hoc radio ou ETHERNET mettant en oeuvre le protocole IP.

Le présent procédé apporte également une solution technique à la problématique de sécurité, liée aux risques de perte et de vol des noeuds les plus exposés. En effet, elle permet la mise en place d'une stratégie consistant à injecter des clés cryptographiques différentes dans les noeuds les plus exposés aux risques de perte et de vol, de celles injectées dans les autres noeuds, situés dans un environnement maitrisé. Ainsi, elle offre l'avantage d'une gestion efficace de la compromission d'un noeud, en limitant le nombre de clés cryptographiques potentiellement compromises, ainsi que le nombre de renouvellements de clés nécessaires pour restaurer le niveau de sécurité du réseau de communication global.

## Revendications

1. Procédé, mis en oeuvre par un noeud d'un réseau ad-hoc (100) comportant une pluralité de noeuds et mettant en oeuvre un service de diffusion Xcast, pour l'échange en sécurité d'une donnée (Payload) depuis un noeud émetteur de la donnée (1) vers une liste de noeuds destinataires de la donnée (6, 12, 14), le noeud mémorisant une topologie de communication dudit réseau définie par un graphe de communication (GC), le graphe de communication comportant des liens entre les noeuds du réseau, un lien entre deux noeuds du graphe de communication correspondant à l'établissement d'une liaison bidirectionnelle de radiocommunication entre ces deux noeuds,
**caractérisé en ce que**, le noeud mémorisant un graphe de sécurité (GS) du réseau (100) définissant une topologie de sécurité du réseau, le graphe de sécurité comportant des liens entre les noeuds du réseau, un lien entre deux noeuds du graphe de sécurité correspondant à l'établissement d'une association de sécurité entre deux noeuds, le procédé comporte, successivement, les étapes consistant à :
- définir, par un module de sécurité du noeud, une route de sécurité sur la base du graphe de sécurité permettant le routage de la donnée depuis le noeud vers l'un des noeuds destinataires de la donnée ;
- élaborer un message comportant la donnée protégée conformément à l'association de sécurité partagée entre ledit noeud et ledit noeud suivant sur la route de sécurité;
- adresser ledit message au noeud suivant sur la route de sécurité ;
- passer le message à un module de routage du noeud ;
- définir, par le module de routage du noeud, une route de communication sur le graphe de communication permettant le routage dudit message du noeud vers le noeud suivant sur la route de sécurité.

2. Procédé selon la revendication 1, dans lequel le graphe de sécurité (GS) comporte :
- une pluralité de noeuds (1 à 16), chaque noeud du graphe de sécurité correspondant à un unique noeud du graphe de communication ;
- une pluralité d'associations de sécurité (SA), une association de sécurité regroupant plusieurs noeuds partageant un même ensemble de clés et d'algorithmes de chiffrement ; et,
- une pluralité de noeuds de confiance, chaque noeud de confiance (2, 4, 3, 9, 16) partageant au moins une association de sécurité amont avec au moins un noeud amont et au moins une association de sécurité aval avec au moins un noeud aval, et étant propre à effectuer une opération de trans-chiffrement d'une donnée protégée conformément à l'association de sécurité amont en une donnée protégée conformément à l'association de sécurité aval.

3. Procédé selon la revendication 2, dans lequel la donnée est relayée le long de la route de sécurité par un noeud de confiance.

4. Procédé selon la revendication 1, dans lequel, à l'étape de génération, le message généré respecte le protocole suivant :
- une partie d'en-tête du message comporte : l'identifiant de l'émetteur du message ; l'identifiant de l'émetteur de la donnée ; l'identifiant de chaque destinataire du message ; et, pour chaque identifiant du destinataire du message, la liste des destinataires de la donnée accessibles via le destinataire du message ;
- une partie de charge utile du message comportant la donnée protégée selon l'association de sécurité partagée entre l'émetteur du message et le ou chaque destinataire du message.

5. Procédé selon l'une quelconque des revendications 1 à 4, comportant une étape initiale de configuration des noeuds de confiance, destinée à définir le ou chaque trans-chiffrement entre une association de sécurité amont et une association de sécurité aval que chaque noeud de confiance est autorisé à effectuer.

6. Procédé selon l'une quelconque des revendications 2 à 5, dans lequel, à l'étape de routage sur la base du graphe de sécurité, pour chaque destinataire de la donnée, une meilleure route de sécurité est sélectionné en se fondant sur un ou plusieurs des critères suivants :
• Minimisation du nombre de trans-chiffrement par des noeuds de confiance ;
• Minimisation du nombre de bonds sur le graphe de communication ; et/ou
• Maximisation d'une grandeur correspondant à la qualité de service associée à la route suivie sur le graphe de communication.

7. Procédé selon l'une quelconque des revendications précédentes, dans lequel la diffusion d'une donnée vers un destinataire est bloquée lorsqu'aucune route de sécurité ne permet de joindre l'émetteur de la donnée au destinataire de la donnée sur le graphe de sécurité (GS).

8. Noeud d'un réseau ad-hoc (100) comportant une pluralité de noeuds et mettant en oeuvre un service de diffusion Xcast, ledit noeud comportant une topologie de communication dudit réseau définie par un graphe de communication (GC), le graphe de communication comportant des liens entre les noeuds du réseau, un lien entre deux noeuds du graphe de communication correspondant à l'établissement d'une liaison bidirectionnelle de radiocommunication entre ces deux noeuds,
**caractérisé en ce qu'**il comporte, en outre, un graphe de sécurité (GS) du réseau (100) définissant une topologie de sécurité du réseau, le graphe de sécurité comportant des liens entre les noeuds du réseau, un lien entre deux noeuds du graphe de sécurité correspondant à l'établissement d'une association de sécurité entre deux noeuds, et **en ce qu'**il est propre à mettre en oeuvre un procédé selon l'une quelconque des revendications 1 à 7 pour la diffusion en sécurité d'une donnée générée par un émetteur de la donnée, vers un ou plusieurs destinataire(s) de la donnée.

9. Réseau ad-hoc (100) mettant en oeuvre un service de diffusion Xcast, **caractérisé en ce qu'**il comporte une pluralité de noeuds, chaque noeud étant conforme à la revendication 8.

10. Réseau selon la revendication 9, dans lequel le réseau comporte au moins un ensemble de noeuds munis respectivement d'une unité de communication radio, de manière à constituer entre eux un réseau de transmission radio.

## Patentansprüche

1. Verfahren, das von einem Knoten eines Ad-hoc-Netzes (100) umgesetzt wird, das eine Mehrzahl von Knoten aufweist und einen Übertragungsdienst Xcast realisiert, für den sicheren Datenaustausch (Payload), von einem Sendeknoten (1) der Daten zu einer Liste von Empfängerknoten (6, 12, 14) der Daten, wobei der Knoten eine Netz-Kommunikationstopologie speichert, die durch einen Kommunikationsgraphen (GC) definiert ist, wobei der Kommunikationsgraph Kanten zwischen den Knoten des Netzers aufweist und eine Kante zwischen zwei Knoten des Kommunikationsgraphen der Herstellung einer bidirektionalen Funkverbindung zwischen diesen zwei Knoten entspricht, **dadurch gekennzeichnet, dass** der Knoten einen Sicherheitsgraphen (GS) des Netzes (100)speichert, der eine Sicherheitstopologie des Netzes definiert, wobei der Sicherheitsgraph Kanten zwischen den Knoten des Netzes aufweist und eine Kante zwischen zwei Knoten des Sicherheitsgraphen der Herstellung einer Sicherheitsassoziation zwischen zwei Knoten entspricht, wobei das Verfahren aufeinanderfolgend die Schritte aufweist, die darin bestehen:
- von einem Sicherheitsmodul des Knotens einen Sicherheitsweg auf der Basis des Sicherheitsgraphen zu definieren, der das Routing der Daten von dem Knoten zu einem der Empfängerknoten der Daten ermöglicht;
- eine Nachricht zu erstellen, die die geschützten Daten gemäß der Sicherheitsassoziation aufweist, die zwischen dem Knoten und dem auf dem Sicherheitsweg folgenden Knoten geteilt wird;
die Nachricht dem auf dem Sicherheitsweg folgenden Knoten zu adressieren;
- die Nachricht an ein Routing-Modul des Knotens zu übergeben;
- durch das Routing-Modul des Knotens einen Kommunikationsweg auf dem Kommunikationsgraphen zu definieren, der das Routing der Nachricht des Knotens zu dem auf dem Sicherheitsweg folgenden Knoten ermöglicht.

2. Verfahren nach Anspruch 1, bei dem der Sicherheitsgraph (GS) umfasst:
- eine Mehrzahl von Knoten (1 bis 16), wobei jeder Knoten des Sicherheitsgraphen einem einzigen Knoten des Kommunikationsgraphen entspricht;
- eine Mehrzahl von Sicherheitsassoziationen (SA) wobei eine Sicherheitsassoziation mehrere Knoten zusammenfasst, die eine selbe Anordnung von kryptographischen Schlüsseln und Algorithmen teilen; und
- eine Mehrzahl von Vertrauensknoten, wobei jeder Vertrauensknoten (2, 4, 3, 9, 16) mindestens eine stromaufwärts gelegene Sicherheitsassoziation mit mindestens einem stromaufwärts gelegenen Knoten und mindestens eine stromabwärts gelegene Sicherheitsassoziation mit mindestens einem stromabwärts gelegenen Knoten teilt und geeignet ist, eine Trans-Verschlüsselungsoperation von geschützten Daten entsprechend der stromaufwärts gelegenen Sicherheitsassoziation in geschützte Daten entsprechend einer stromabwärts gelegenen Sicherheitsassoziation durchzuführen.

3. Verfahren nach Anspruch 2, bei dem die Daten entlang des Sicherheitswegs durch einen Vertrauensknoten weitergeleitet werden.

4. Verfahren nach Anspruch 1, bei dem bei dem Erzeugungsschritt die erzeugte Nachricht das folgende Protokoll befolgt:
- ein Header der Nachricht aufweist: die Kennung des Senders der Nachricht; die Kennung des Senders der Daten; die Kennung jedes Empfängers der Nachricht; und für jede Kennung des Empfängers der Nachricht die Liste der Empfänger der Daten, die über den Empfänger der Nachricht zugänglich sind;
- einen Nutzdatenteil der Nachricht, die die gemäß der Sicherheitsassoziation, die zwischen dem Sender der Nachricht und dem oder jedem Empfänger der Nachricht geteilt wird, geschützten Daten aufweist.

5. Verfahren nach einem der beliebigen der Ansprüche 1 bis 4, das einen Anfangsschritt der Konfiguration der Vertrauensknoten aufweist, der geeignet ist, die oder jede Trans-Verschlüsselung zwischen einer stromaufwärts gelegenen Sicherheitsassoziation und einer stromabwärts gelegenen Sicherheitsassoziation, die jeder Vertrauensknoten durchführen darf, zu definieren.

6. Verfahren nach einem der beliebigen der Ansprüche 2 bis 5, bei dem bei dem Routing-Schritt auf der Basis des Sicherheitsgraphen für jeden Empfänger der Daten ein bester Sicherheitsweg unter Stützung auf eine oder mehrere der folgenden Kriterien ausgewählt wird:
• Minimierung der Anzahl der Trans-Verschlüsselung durch die Vertrauensknoten;
• Minimierung der Anzahl von Sprüngen auf dem Kommunikationsgraph; und/oder
• Maximierung einer Größe entsprechend der Dienstqualität, die der auf dem Kommunikationsgraph gefolgten Route zugeordnet ist.

7. Verfahren nach einem beliebigen der vorhergehenden Ansprüche, bei dem die Übertragung von Daten zu einem Empfänger blockiert wird, wenn überhaupt kein Sicherheitsweg ermöglicht, den Sender der Daten mit dem Empfänger der Daten auf dem Sicherheitsgraphen (GS) zu verbinden.

8. Knoten eines Ad-hoc-Netzes (100), das eine Mehrzahl von Knoten aufweist und einen Übertragungsdienst Xcast umsetzt, wobei der Knoten eine Kommunikationstopologie des Netzes, die durch den Kommunikationsgraphen (GC) definiert ist, aufweist,
wobei der Kommunikationsgraph Kanten zwischen den Knoten des Netzes aufweist und eine Kante zwischen zwei Knoten des Kommunikationsgraphen der Herstellung einer bidirektionalen Funkkommunikation zwischen diesen zwei Knoten entspricht,
**dadurch gekennzeichnet, dass**
er außerdem einen Sicherheitsgraphen (GS) des Netzes (100) aufweist, der eine Sicherheitstopologie des Netzes definiert, wobei der Sicherheitsgraph Kanten zwischen den Knoten des Netzes aufweist und eine Kante zwischen zwei Knoten des Sicherheitsgraphen der Herstellung einer Sicherheitsassoziation zwischen zwei Knoten entspricht, und dass er geeignet ist, ein Verfahren nach einem beliebigen der Ansprüche 1 bis 7 für die gesicherte Übertragung von Daten, die von einem Sender von Daten zu einem oder mehreren Empfängern von Daten erzeugt werden, umzusetzen.

9. Ad-hoc-Netz (100), das einen Übertragungsdienst Xcast umsetzt,
**dadurch gekennzeichnet, dass** es eine Mehrzahl von Knoten aufweist, wobei jeder Knoten nach dem Anspruch 8 ausgebildet ist.

10. Netz nach Anspruch 9, bei dem das Netz mindestens eine Anordnung von Knoten aufweist, die jeweils mit einer Funkkommunikationseinheit ausgerüstet sind, um zwischen sich ein Funkübertragungsnetz zu bilden.

## Claims

1. A method, implemented in a node of an ad-hoc network (100) comprising a plurality of nodes and implementing an Xcast broadcasting service for a secure exchange of a data (PAYLOAD) from a sender node (1), sending the data, to a list of receiver nodes (6, 12, 14), receiving the data, the node memorizing a communication topology of the said network defined by a communication graph (GC), the communication graph comprising links between the nodes of the network, a link between two nodes of the communication graph corresponding to the establishment of a bidirectional radio-communication link between these two nodes,
**characterised in that**, the node memorizing a security graph (GS) of the network (100) defining a security topology of the network, the security graph comprising links between the nodes of the network, a link between two nodes of the security graph corresponding to the establishment of a security association between these two nodes, the method comprises the successive steps consisting of:
- defining, by a security module of the node, a security route, on the basis of the security graph, allowing the routing of the data from the node to one of the receiver nodes of the data;
- generating a message containing the data protected in accordance with a security association shared between said node and the subsequent node on the security route;
- addressing the message to the subsequent node on the security route;
- passing the message to a routing module of the node;
- defining, by the routing message of the node, a communication route on the communication graph allowing the routing of said message from the node to the subsequent node on the security route.

2. A method according to claim 1, wherein the security graph (GS) comprises:
- a plurality of nodes (1 - 16), each node of the security graph corresponding to a single node of the communication graph;
- a plurality of security associations (SA), one security association grouping together several nodes sharing a same set of keys and encryption algorithms ; and,
- a plurality of trusted nodes, each trusted node (2, 4, 3, 9, 16) sharing at least one upstream security association with at least one upstream node and at least one downstream security association with at least one downstream node, and capable of performing an operation of trans-encryption of a data protected in accordance with the upstream security association into a data protected in accordance with the downstream security association.

3. A method according to claim 2, wherein the data is relayed along the security route by a trusted node.

4. A method according to claim 1, wherein, in the step of generating, the message generated complies with the following protocol:
- a header portion of the message contains: an identifier of the sender node of the message; an identifier of the sender node of the data; an identifier of each receiver node of the message; and, for each identifier of the receiver node of the message, a list of receiver nodes of the data that are accessible via the receiver node of the message;
- a payload portion of the message containing the data protected in accordance with a security association shared between the sender node of the message and the or each receiver node of the message.

5. A method according to any one of claims 1 to 4, including an initial configuration step for configuring the plurality of trusted nodes, intended to define the or each trans-encryption between an upstream security association and a downstream security association that each trusted node is authorised to perform.

6. A method according to any one of claims 2 to 5, wherein, in the step of routing on the basis of the security graph, for each receiver node of the data, a best security route is selected based on one or more of the following criteria :
• Minimisation of the number of trans-encryptions performed by trusted nodes ;
• Minimisation of the number of hops on the communication graph ; and / or
• Maximisation of a quantity corresponding to the quality of service associated with the route followed on the communication graph.

7. A method according to any one of the preceding claims, wherein the communication of a data to a receiver node is blocked when there is no security route available to enable the sender node of the data to connect with said receiver node of the data on the security graph (GS).

8. A node of an ad-hoc network (100), implementing a plurality of nodes and implementing an Xcast broadcasting service, said node comprising a communication topology for said network defined by a communication graph (GC), the communication graph comprising links between the nodes of the network, a link between two nodes of the communication graph corresponding to the establishment of a bidirectional radio-communication link between these two nodes,
**characterised in that** it includes, in addition, a security graph (GS) of the network (100) defining a security topology for the network, the security graph comprising links between the nodes of the network, a link between two nodes of the security graph corresponding to the establishment of a security association between these two nodes,
and **in that** it is capable of implementing a method according to any one of claims 1 to 7 for the secure broadcasting of a data generated by a sender node of the data, to one or more receiver nodes of the data.

9. An ad hoc network (100), implementing an Xcast broadcasting service, **characterised in that** it comprises a plurality of nodes, each node of the plurality of nodes being a node according to claim 8.

10. The network of claim 9, wherein the network includes at least one cluster of nodes, each node of the cluster of nodes being provided with a radio communication unit, in a manner so as to form there between a radio transmission network.
